# EUROPEAN PATENT APPLICATION

(11) **EP 3 352 152 A1**
(43) Date of publication of application: **25.07.2018**
(21) Application number: 18152253.3
(22) Date of filing: 18.01.2018
(51) Int. Cl.: G07G 1/00, G07G 1/01, G07G 1/12, G06Q 20/20

(54) **CHECKOUT APPARATUS AND CHECKOUT METHOD**

(30) Priority: 19.01.2017 JP 2017007290
(71) Applicant: Toshiba TEC Kabushiki Kaisha, Tokyo 141-8562 (JP)
(72) Inventor: KAKINO, Tomonari, Shinagawa-ku,, Tokyo 141-8562 (JP)
(74) Representative: Takeuchi, Maya

(57) **Abstract**

According to an embodiment, a checkout apparatus includes a camera, a scanner, and a processor. The processor executes registration processing of registering product information on the basis of a scan image output from the scanner. The processor outputs an alert when an instruction to terminate the registration processing is given and when determining that there is a product in a placing area for product on the basis of a captured image of the camera.

## Description

### FIELD

An embodiment to be described here generally relates to a checkout apparatus and a checkout method.

### BACKGROUND

In the past, there has been a self-checkout counter (self-checkout apparatus) that performs registration and settlement of products by an operation of a customer who purchases the products.

Some self-checkout counters in the related art display guidance for customers, which shows an appropriate operation method.

However, although the self-checkout counters in the related art can give guidance of a correct operation procedure to customers, the self-checkout counters fail to notify customers of products on which the customers unintentionally have forgotten to perform a registration operation.

For example, in an operation system in which customers put products to be purchased in baskets and carry those baskets, the customers may miss products such as small and thin products within the baskets and forget to register those products.

If the customers do not know that they forget to register some products, checkout processing may not be adequately performed or a checkout operation may be performed again.

Further, also in a point-of-sale (POS) system (checkout apparatus) operated by an operator such as a sales person, there is a possibility that the operator forgets to register products.

To solve the above-cited problems, there is provided a checkout apparatus, comprising: a camera that captures an image of an imaging range including a placing area where a product is placed and outputs the captured image; a scanner that scans the product taken from the placing area and outputs a scan image; and a processor that acquires product information, the product information indicating the product recognized on the basis of the scan image output from the scanner, and executes registration processing of registering the product information, determines, when an instruction to terminate the registration processing is given, whether there is a product in the placing area on the basis of the captured image, outputs an alert when determining that there is a product in the placing area, and executes, when determining that there is no product in the placing area, checkout processing of performing settlement for the product that has been subjected to the registration processing.

The checkout apparatus may further comprise a display that displays information on a product, wherein the processor causes the display to display a message as the alert, the message indicating that there is a product in the placing area.

Preferably, the processor causes the display to display a registration screen during the registration processing, the registration screen including content related to the registration processing.

Preferably, the processor adds, when the instruction to terminate the registration processing is given and when determining that there is a product in the placing area, the message to the registration screen and causes the display to display the resultant registration screen.

Preferably, the processor adds a window to the registration screen, the window including the message, a button to receive an instruction to return to the registration processing, and a button to receive an instruction to proceed to the checkout processing, and causes the display to display the resultant registration screen.

The checkout apparatus may further comprise a speaker that outputs a sound, wherein the processor causes the speaker to output a sound as the alert, the sound indicating that there is a product in the placing area.

The present invention further relates to a checkout method for a checkout apparatus, the checkout apparatus including a camera that captures an image of an imaging range including a placing area where a product is placed and outputs the captured image, and a scanner that scans the product taken from the placing area and outputs a scan image, the checkout method comprising: acquiring product information, the product information indicating the product recognized on the basis of the scan image output from the scanner, and executing registration processing of registering the product information; determining, when an instruction to terminate the registration processing is given, whether there is a product in the placing area on the basis of the captured image; outputting an alert when determining that there is a product in the placing area; and executing, when determining that there is no product in the placing area, checkout processing of performing settlement for the product that has been subjected to the registration processing.

Preferably, the checkout apparatus further comprises a display, and the method further comprises: displaying information on a product on the display; and
displaying a message as the alert on the display, the message indicating that there is a product in the placing area.

The checkout method may further comprise : displaying a registration screen on the display during the registration processing, the registration screen including content related to the registration processing.

The checkout method may further comprise, adding, when the instruction to terminate the registration processing is given and when determining that there is a product in the placing area, the message to the registration screen and displaying the resultant registration screen on the display.

The checkout method may further comprise adding a window to the registration screen, the window including the message, a button to receive an instruction to return to the registration processing, and a button to receive an instruction to proceed to the checkout processing, and displaying the resultant registration screen on the display.

Preferably, the checkout apparatus further comprises a speaker and the method further comprises outputting a sound as the alert from the speaker, the sound indicating that there is a product in the placing area.

The present invention also relates to a checkout apparatus, comprising: a display that displays information on a product; a camera that captures an image of an imaging range including a placing area where a product is placed and outputs the captured image; a scanner that scans the product taken from the placing area and outputs a scan image; and a processor that acquires product information, the product information indicating the product recognized on the basis of the scan image output from the scanner, and executes registration processing of registering the product information, determines, during the registration processing, whether there is a product in the placing area on the basis of the captured image, causes, when determining that there is a product in the placing area, the display to display an indicator, and executes, when an instruction to terminate the registration processing is given, checkout processing of performing settlement for the product registered in the registration processing.

Preferably, the processor hides the indicator and executes the checkout processing when determining that there is no product in the placing area on the basis of the captured image.

Preferably, the processor causes the display to display a registration screen during the registration processing, the registration screen including content related to the registration processing, and adds, when determining that there is a product in the placing area, the indicator to the registration screen and causes the display to display the resultant registration screen.

### BRIEF DESCRIPTION OF THE DRAWINGS

Fig. 1 is a view of an outer appearance of a checkout apparatus according to an embodiment.
Fig. 2 is a block diagram showing a configuration example of a control system in the checkout apparatus according to the embodiment.
Fig. 3 is a flowchart showing a first operation example of the checkout apparatus according to the embodiment.
Fig. 4 is a flowchart showing registration processing in the first operation example of the checkout apparatus according to the embodiment.
Fig. 5 is a flowchart showing product confirmation processing in the first operation example of the checkout apparatus according to the embodiment.
Fig. 6 is a diagram showing an example of an alert that is displayed on a display of the checkout apparatus according to the embodiment.
Fig. 7 is a flowchart showing checkout processing in the checkout apparatus according to the embodiment.
Fig. 8 is a flowchart showing a second operation example of the checkout apparatus according to the embodiment.
Fig. 9 is a flowchart showing registration processing in the second operation example of the checkout apparatus according to the embodiment.
Fig. 10 is a flowchart showing product confirmation processing in the second operation example of the checkout apparatus according to the embodiment.
Fig. 11 is a diagram showing an example of an indicator that is displayed on the display of the checkout apparatus according to the embodiment.

### DETAILED DESCRIPTION

According to one embodiment, a checkout apparatus includes a camera, a scanner, and a processor.

The camera captures an image of an imaging range including a placing area where a product is placed and outputs the captured image.

The scanner scans the product taken from the placing area and outputs a scan image.

The processor acquires product information, the product information indicating the product recognized on the basis of the scan image output from the scanner, and executes registration processing of registering the product information.

The processor determines, when an instruction to terminate the registration processing is given, whether there is a product in the placing area on the basis of the captured image.

The processor outputs an alert when determining that there is a product in the placing area.

Further, the processor executes, when determining that there is no product in the placing area, checkout processing of performing settlement for the product that has been subjected to the registration processing.

Hereinafter, an embodiment will be described with reference to the drawings.

In the drawings, the same reference symbols indicate the same or similar units.

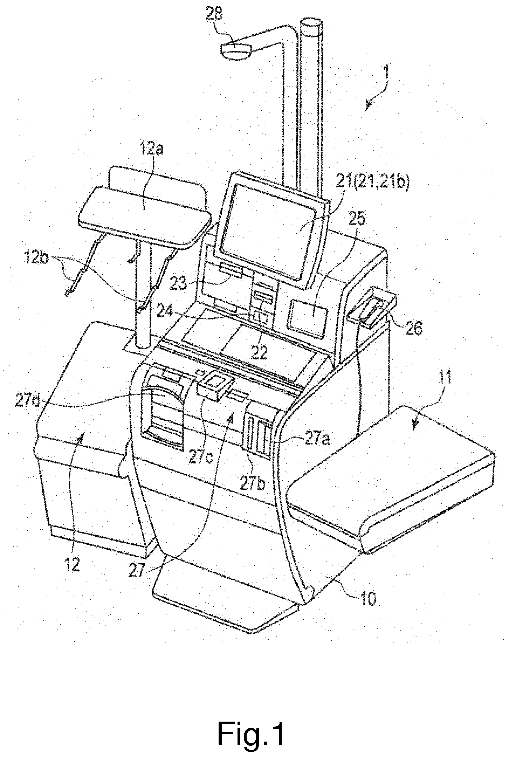

Fig. 1 is a view of an outer appearance of a checkout apparatus 1 according to an embodiment.

The checkout apparatus 1 shown in Fig. 1 is a self-checkout counter that executes product registration processing and checkout processing by an operation of a customer who purchases a product.

It should be noted that the checkout apparatus 1 according to the embodiment may be an apparatus operated by an operator such as a sales person.

The embodiment to be described below may be applied to a product recognition (registration) apparatus in a point-of-sale (POS) system.

As shown in Fig. 1, the checkout apparatus 1 includes a main body 10, and a first product placing table 11 and a second product placing table 12 that are disposed on the right and left sides of the main body 10, respectively.

In this embodiment, a product that is not yet subjected to registration processing is assumed to be placed on the first product placing table 11. Further, a product that has been subjected to registration processing is assumed to be placed on the second product placing table 12.

It should be noted that the product that is not yet subjected to registration processing may be put in a cart and the cart may be disposed at a predetermined position.

In this case, the predetermined position for the cart containing the product that is not yet subjected to registration processing only needs to be within an imaging range of a camera 28 to be described later.

The first product placing table 11 is disposed on the right side of the main body 10 when viewed from the customer facing the main body 10.

For example, a basket (container), in which a product that a customer intends to purchase (product that is not yet subjected to registration processing) is put, is placed on the first product placing table 11.

Further, a product that a customer intends to purchase (product that is not yet subjected to registration processing) may be directly placed on the first product placing table 11.

The product placed on the first product placing table 11 only needs to fall within at least a range imaged by the camera 28 to be described later.

Further, the second product placing table 12 is disposed on the left side of the main body 10 when viewed from the customer facing the main body 10.

A product that has been taken from the first product placing table 11 and then subjected to the registration processing is placed on the second product placing table 12.

For example, a product whose bar code is read by the main body 10 is placed on the second product placing table 12. Alternatively, a product whose product information is input by a key operation (product that has been subjected to registration processing) is placed on the second product placing table 12. The product information is information indicating a product.

As shown in Fig. 1, the second product placing table 12 includes a temporary placing table 12a that is provided above the second product placing table 12 via a support column.

The temporary placing table 12a is used, for example, when a customer temporarily places the product before putting it into a shopping bag.

The temporary placing table 12a includes two holding arms 12b that are provided separately from side to side.

The holding arms 12b are used by the customer to lock the shopping bag (plastic shopping bag) with the shopping bag opened.

The main body 10 includes a display 21, a card reader/writer (RW) 22, a printer 23, a speaker 24, a scanner 25, a hand scanner 26, and a cash processing machine 27.

Further, the camera 28 is provided above the main body 10 via a support column.

The display 21 is a touch panel including a display device 21a and a touch sensor 21b.

The display device 21a displays an operation guide, an icon (touch key) selectable by the customer, a message of warning as an alert, or the like.

The display device 21a is, for example, a liquid crystal display (LCD).

The touch sensor 21b detects a touch position of a person on a display screen (operation screen) of the display device 21a.

The touch sensor 21b sends information indicating the detected touch position to a processor that will be described later as a processing unit.

For example, the display device 21a displays a GUI (Graphical User Interface) for inputting a selection instruction for a payment method (cash, card) and the like and various types of information by a touch operation of the customer.

Further, the display device 21a displays a guide screen, an information input screen, a product registration screen, a checkout screen, and the like.

The guide screen is a screen that displays a guide (message) for notifying the customer of an operation method.

The information input screen is an operation screen for inputting, for example, information of a product with no bar code.

The product registration screen is a screen that displays information on a registered product.

For example, information on a product identified by a bar code read by the scanner 25 or hand scanner 26, a product specified by a key operation, and the like are displayed on the product registration screen.

The checkout screen is a screen that displays a total payment amount of products to be purchased (registered products), a deposit amount, a change amount, and the like in the checkout processing where the customer pays for the products.

The card reader/writer (RW) 22 performs processing on a card.

The card reader/writer 22 includes a card insertion port.

The card reader/writer 22 has a function of reading data recorded on a card and a function of writing data to the card.

The card reader/writer 22 may be used for a magnetic card on which magnetic information is recorded or may be a contact or contactless integrated circuit (IC) card.

Further, the card reader/writer 22 may have a mechanism for performing processing on various types of cards.

For example, the card reader/writer 22 performs processing on cards such as a credit card for checkout and a membership card, which are inserted into the card insertion port.

Examples of the card for checkout (settlement) include a credit card, a debit card, an electronic money card, and a prepaid card.

Further, examples of the membership card include a membership card on which member information is recorded and a point card on which points usable as service are recorded.

The printer 23 prints a receipt.

The printer 23 includes a receipt issue port.

The printer 23 prints various character strings, images, and the like on receipt paper to issue a receipt.

The printer 23 is, for example, a thermal printer or a dot impact printer.

For example, the printer 23 creates, when the checkout processing is completed, a receipt on which the content of processing (content of checkout) is printed, and discharges the created receipt from the receipt issue port.

The speaker 24 outputs sounds such as a warning sound as an alert, and a sound as a message.

The scanner 25 and the hand scanner 26 read information for identifying a product.

In this embodiment, the scanner 25 and the hand scanner 26 read a bar code provided to a product, as information for identifying a product.

The scanner 25 optically reads an image of a bar code of a product, which is held by the customer over the scanner 25, such that the bar code provided to the product faces the scanner 25.

The hand scanner 26 is operated by the customer with the hand. The hand scanner 26 is moved close to the bar code provided to the product by the customer, and thus optically reads the image of the bar code.

It should be noted that each of the scanner 25 and the hand scanner 26 only need to be one that reads information for recognizing a product, and may be one that reads information other than the bar code, for example.

The cash processing machine 27 processes cash.

The cash processing machine 27 includes a bill depositing port 27a, a bill dispensing port 27b, a coin depositing port 27c, a coin dispensing port 27d, and the like.

The cash processing machine 27 processes bills deposited in the bill depositing port 27a.

The cash processing machine 27 dispenses bills as change from the bill dispensing port 27b.

The cash processing machine 27 receives and processes coins deposited in the coin depositing port 27c.

The cash processing machine 27 dispenses coins as change from the coin dispensing port 27d.

The camera 28 captures an image of an imaging range including an area where at least a product that is not yet subjected to registration processing (unregistered) is placed (placing area).

For example, when a basket in which a product that is not yet subjected to registration processing is put is placed on the first product placing table 11, the imaging range of the camera 28 is set such that an image of the entire inside of the basket can be captured.

Further, when a product that is not yet subjected to registration processing is directly placed on the first product placing table 11, the imaging range of the camera 28 is set such that an image of the entire first product placing table 11 can be captured.

Furthermore, when a cart in which a product that is not yet subjected to registration processing is put is disposed at a predetermined position, the imaging range of the camera 28 is set such that an image of the inside of the cart disposed at the predetermined position can be captured.

It should be noted that the predetermined position at which the cart is disposed is set to, for example, the vicinity of the first product placing table 11.

Further, the camera 28 may be installed so as to be capable of capturing an image of a state where the customer performs operations for the product registration processing and the checkout processing.

In this case, the imaging range is set such that the imaging range of the camera 28 covers the first product placing table 11 and the second product placing table 12.

Such setting allows the camera 28 to capture a video until the product placed on the first product placing table 11 is placed on the second product placing table 12.

A video captured by the camera 28 is stored in a storage device, and can thus be used to confirm a situation in a case where an error occurs, for example.

Next, a configuration of a control system in the checkout apparatus 1 will be described.

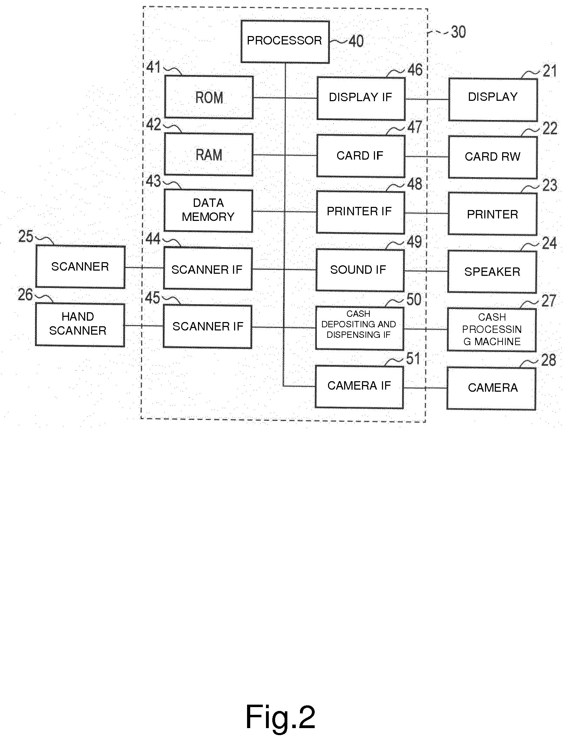

Fig. 2 is a block diagram showing a configuration example of a control system in the checkout apparatus 1 according to this embodiment.

As shown in Fig. 2, the main body 10 of the checkout apparatus 1 houses a control unit 30.

The control unit 30 includes, for example, a computer.

The display 21, the card reader/writer 22, the printer 23, the speaker 24, the scanner 25, the hand scanner 26, the cash processing machine 27, the camera 28, and the like are electrically connected to the control unit 30.

Further, the control unit 30 includes a processor 40, a ROM (read-only memory) 41, a RAM (random-access memory) 42, a data memory 43, and various interfaces (IFs) 44 to 51.

Further, the checkout apparatus 1 may be connected to a computer such as a server via a network such as a LAN (local area network).

For example, the checkout apparatus 1 may be connected to, via the network, another checkout apparatus and a store computer that manages the whole system.

In such a system, the checkout apparatus 1 may appropriately acquire information on a product, or the like, from the store computer.

The processor 40 executes a program and thus executes various types of processing.

The processor 40 is, for example, a CPU (central processing unit).

The processor 40 executes a program stored in the ROM 41 or the data memory 43, to achieve various processing functions.

For example, the processor 40 executes a program for registration processing, and thus executes processing of registering a product (registration processing) as a registration mode.

The processor 40 executes a program for checkout processing, and thus executes checkout processing of settling payment of a product, as a checkout mode.

The processor 40 executes a program for product confirmation, and thus executes product confirmation processing of sensing the presence or absence of a product that is not yet subjected to the registration processing, as product confirmation mode.

The ROM 41 is a non-volatile memory and stores programs and data.

For example, the ROM 41 stores programs such as an operating system, middleware, and an application.

Further, the ROM 41 may store data that is referred to by the processor 40 when the processor 40 executes various types of processing.

The RAM 42 stores data for operation.

The RAM 42 is a memory used as so-called a work area.

The RAM 42 appropriately stores data that is referred to or temporarily used by the processor 40 when the processor 40 executes various types of processing.

The data memory 43 is a memory that stores data.

The data memory 43 is a rewritable non-volatile memory.

The data memory 43 includes, for example, EEPROM (registered trademark) (electric erasable programmable read-only memory), an HDD (hard disk drive), or an SSD (solid state drive).

The data memory 43 saves data that is used by the processor 40 when the processor 40 executes various types of processing or data that is generated by processing of the processor 40.

Further, the data memory 43 may store various programs executed by the processor 40.

For example, the data memory 43 may store a program for registration processing, a program for checkout processing, and a program for product confirmation.

Further, the RAM 42 or the data memory 43 stores information on a product registered in the product registration processing (registered product).

The RAM 42 or the data memory 43 may store, for example, information on registered products as data in the form of list (registered product list).

Further, the RAM 42 or the data memory 43 stores images captured by the camera 28.

The data memory 43 may store video data, which is obtained by adding, for example, data of a time stamp indicating an imaging time to an image captured by the camera 28.

The processor 40 is connected to the scanner 25 via the scanner IF 44.

The processor 40 acquires, via the scanner IF 44, an image (scan image) that is read by the scanner 25.

Further, the processor 40 is connected to the hand scanner 26 via the scanner IF 45.

The processor 40 acquires, via the scanner IF 45, an image (scan image) that is read by the hand scanner 26.

The processor 40 decodes a bar code included in the scan image of the scanner 25 or the hand scanner 26, and thus identifies a product indicated by the bar code.

The processor 40 is connected to the display 21 via the display IF 46.

The processor 40 controls, via the display IF 46, display content, which is displayed by the display device 21 a of the display 21.

Further, the processor 40 acquires, via the display IF 46, information indicating a touch position sensed by the touch sensor 21 b of the display 21.

For example, the processor 40 displays an alert for informing a customer of the presence of a product that is not yet subjected to registration processing (unregistered), or a message as an indicator, on the display 21.

Further, the processor 40 senses an input to each icon (touch key) displayed on the display 21, on the basis of the information indicating a touch position.

The processor 40 is connected to the card reader/writer 22 via the card IF 47.

The processor 40 controls processing of the card reader/writer 22 on a card via the card IF 47.

For example, the processor 40 executes checkout processing with a credit card that is processed by the card reader/writer 22.

The processor 40 is connected to the printer 23 via the printer IF 48.

The processor 40 controls the printer 23 via the printer IF 48.

For example, the processor 40 issues a receipt showing a result of the checkout processing by the printer 23.

The processor 40 is connected to the speaker 24 via the sound IF 49.

The processor 40 controls, via the sound IF 49, a sound that is output from the speaker 24.

For example, the processor 40 outputs, from the speaker 24, a sound (buzzer) as an alert for informing the customer of the presence of a product that is not yet subjected to registration processing.

The processor 40 is connected to the cash processing machine 27 via the cash depositing and dispensing IF 50.

The processor 40 controls the cash processing machine 27 via the cash depositing and dispensing IF 50.

For example, the cash processing machine 27 counts cash deposited by the customer.

The processor 40 acquires information of the amount of deposit counted by the cash processing machine 27.

Further, the processor 40 performs control of dispensing change, which is calculated on the basis of the amount of deposit and the total payment amount (price of products) of the registered products, by the cash processing machine 27.

The processor 40 is connected to the camera 28 via the camera IF 51.

The processor 40 acquires the image captured by the camera 28, via the camera IF 51.

For example, the processor 40 acquires a captured image, which is captured by the camera 28 and includes an image of the inside of the basket (container) on the first product placing table 11, when the processor 40 proceeds to the checkout processing.

Further, the processor 40 acquires a captured image, which is captured by the camera 28 continuously (for example, at predetermined cycles) during the registration processing and includes an image of the inside of the basket (container) on the first product placing table 11.

Hereinafter, a first operation example and a second operation example of the checkout apparatus 1 configured as described above will be described.

### (First Operation Example)

Hereinafter, the first operation example of the checkout apparatus 1 will be described.

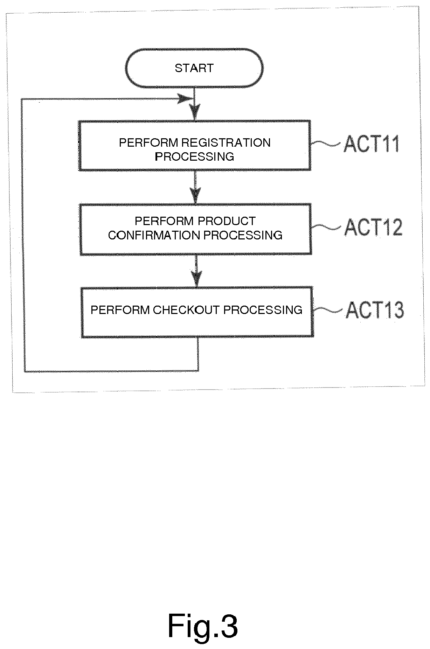

Fig. 3 is a flowchart showing the general flow of each processing as the first operation example of the checkout apparatus 1.

Here, it is assumed that a customer comes in front of the checkout apparatus 1 with a product to be purchased.

The customer sets the product to be purchased (product that is not yet subjected to registration) at a predetermined position.

For example, the customer places a basket (container) in which the product to be purchased is put on the first product placing table 11.

Further, the customer may directly place the product to be purchased on the first product placing table 11.

Further, the customer may dispose a cart in which the product to be purchased is put at a predetermined position.

After seting the product to be purchased at the predetermined position, the customer gives an instruction to start the checkout processing or the registration processing for the product by a predetermined operation.

For example, the customer touches a touch key displayed on the display 21 to give an instruction to start the registration processing.

Further, the start of the registration processing may be recognized by the processor 40 in response to the movement of the customer.

For example, the processor 40 may analyze an image captured by the camera 28 to recognize the movement of the customer, and determine to start the registration processing according to the recognized movement of the customer.

In ACT 11 shown in Fig. 3, the processor 40 of the checkout apparatus 1 executes the registration processing of registering a product as a checkout target according to an instruction to start the registration processing.

In the registration processing (registration mode), the processor 40 identifies each product by a bar code read by the scanner 25 or the hand scanner 26 according to a customer operation.

The processor 40 registers information on the identified product (product information), in a case where the product can be identified by the bar code.

Further, in the registration processing, the processor 40 may register a product as a product specified by the customer.

For example, the processor 40 may register a product taken from the basket or the like, as a product specified by the customer operating a touch key displayed on the display 21.

When the customer determines that the registration of the product is completed, the customer gives an instruction to proceed to the checkout processing (terminate the registration processing).

For example, the customer operates the touch key displayed on the display 21, to give an instruction to proceed to the checkout processing.

When an instruction to proceed to the checkout processing (terminate the registration processing) is given, the processing of the processor 40 proceeds to ACT 12.

In ACT 12, the processor 40 executes the product confirmation processing of confirming the presence or absence of an unregistered product (product that is not yet subjected to registration processing).

In the product confirmation processing, the processor 40 acquires the captured image, which is captured by the camera 28.

The camera 28 captures an image of an imaging range including a placing area where at least a product that is not yet subjected to registration processing is placed.

For example, the camera 28 captures an image of an imaging range from above, the imaging range including the first product placing table 11 and/or a predetermined position where the cart is disposed.

The processor 40 acquires, via the camera IF 51, the image captured by the camera 28.

The processor 40 determines whether there is an unregistered product on the basis of the captured image acquired via the camera IF 51.

When the processor 40 determines that there is no unregistered product through the product confirmation processing, the processing of the processor 40 proceeds to the checkout processing (ACT 13) for the registered product.

When the processor 40 determines that there is an unregistered product through the product confirmation processing, the processor 40 issues an alert by the display 21 and/or the speaker 24.

When an alert is issued, the processing of the processor 40 proceeds to the registration processing for the product or the checkout processing (ACT 13) according to a customer operation.

When proceeding to the checkout processing (ACT 13), the processor 40 executes the checkout processing of settling the total payment amount of all the registered products.

For example, the processor 40 determines the price of each of the registered products and calculates the total payment amount of the products.

The processor 40 displays the calculated total payment amount on the display 21 and performs processing of receiving the total payment amount from the customer.

When the reception of the total payment amount of the products is completed, the processor 40 proceeds to the registration processing and accepts the checkout processing for the next customer.

Next, the product registration processing in the first operation example will be described.

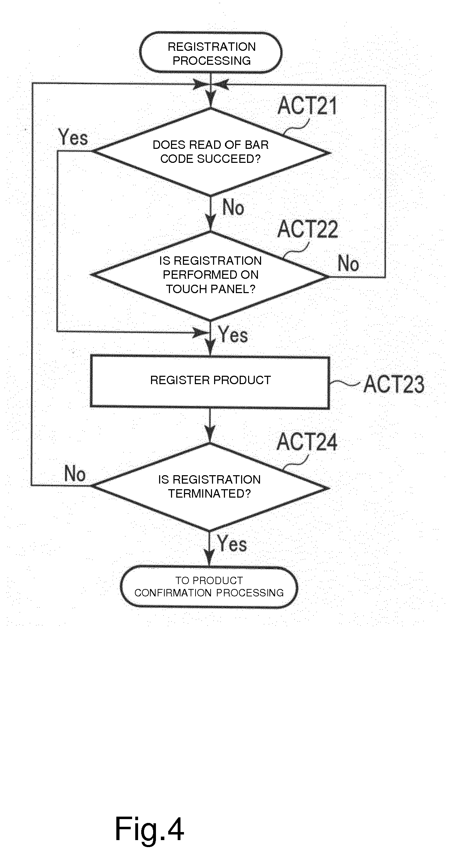

Fig. 4 is a flowchart showing the registration processing for products in the first operation example of the checkout apparatus 1.

After giving an instruction to start the registration processing for products, the customer holds a part of a bar code provided to each product over the scanner 25. Alternatively, the customer holds the hand scanner 26 over the bar code provided to the product.

For example, in a case where the customer holds a bar code provided to a product over the scanner 25, the customer takes out the products placed on the first product placing table 11 one by one and brings the product close to the scanner 25 such that the bar code of the product faces a read position of the scanner 25.

The scanner 25 reads an image of the bar code part of the product held over the read position.

The scanner 25 supplies the read image (scan image) to the control unit 30 of the main body 10 via the scanner IF 44.

Further, in a case where the customer holds the hand scanner 26 over the bar code provided to the product, the customer holds the hand scanner 26 with the hand and brings the hand scanner 26 close to the bar code provided to the product.

The hand scanner 26 reads an image of the bar code part of the product close thereto.

The hand scanner 26 supplies the read image (scan image) to the control unit 30 of the main body 10 via the scanner IF 45.

In ACT 21 of the product registration processing shown in Fig. 4, the processor 40 acquires the scan image of the product via the scanner IF 44 or the scanner IF 45 and performs processing of recognizing the bar code from the acquired scan image.

For example, the processor 40 identifies the product by detecting the bar code for identifying the product from the scan image and decoding the detected bar code.

When the processor 40 can identify the product from the bar code, that is, the read of the bar code succeeds (ACT 21, Yes), the processing of the processor 40 proceeds to ACT 23. Further, when the processor 40 fails to identify the product from the bar code, that is, the read of the bar code fails to succeed (ACT 21, No), the processing of the processor 40 proceeds to ACT 22.

In ACT 22, the processor 40 receives an input of product information by a key operation of the touch key or the like displayed by the display 21.

With this configuration, the processor 40 receives product information of a product provided with no bar code, a product whose bar code fails to be detected, or the like by the key operation. When the product information is input by the key operation (ACT 22, YES), the processing of the processor 40 proceeds to ACT 23.

In ACT 23, the processor 40 registers information indicating a product identified from the bar code or information indicating a product input by the key operation, as product information of the product to be a checkout target.

For example, the processor 40 additionally writes the information of the product as a checkout target in a registered product list created in the RAM 42.

In the registered product list, for example, data such as a product code, a product name, a unit price, and an input time is recorded.

The customer places the product, which has been registered by the bar code or key operation, on the second product placing table 12.

Next, in ACT 24, the processor 40 receives an instruction to terminate the registration (proceed to the checkout processing).

For example, the processor 40 displays a product registration screen on the display 21 during the registration mode, the product registration screen including a touch key (checkout button) that gives an instruction to proceed to the checkout processing (terminate the registration).

It should be noted that information showing a registered product, the total price of registered products, an icon (button) for inputting the product information by the key operation, and the like may be displayed on the product registration screen.

When an instruction to proceed to the checkout processing (terminate the registration processing) with use of the checkout button is not given (ACT 24, NO), the processing of the processor 40 returns to ACT 21 described above. In ACT 21 described above, the processor 40 continues the processing of registering the next product.

When an instruction to proceed to the checkout processing (terminate the registration processing) with use of the checkout button is given (ACT 24, Yes), the processor 40 terminates the product registration and determines that an instruction to proceed to the checkout processing is given.

In the first operation example, when the product registration processing is terminated, the processor 40 of the checkout apparatus 1 performs the product confirmation processing before proceeding to the checkout processing instructed as described above.

Next, the product confirmation processing in the first operation example will be described.

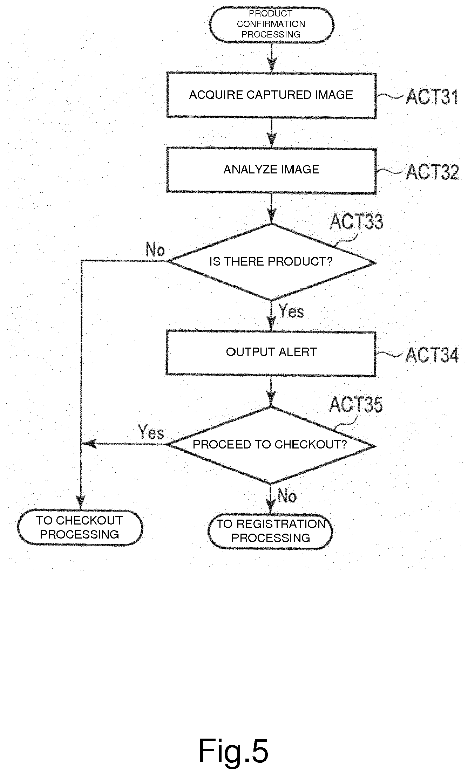

Fig. 5 is a flowchart showing the product confirmation processing in the first operation example of the checkout apparatus 1.

The product confirmation processing in the first operation example is executed before the processor 40 proceeds to the checkout processing after the product registration processing is completed.

In other words, when an instruction to proceed to the checkout processing is given in the registration mode, the processor 40 of the checkout apparatus 1 performs the product confirmation processing.

The product confirmation processing is processing of confirming whether there is an unregistered product on the basis of the image captured by the camera 28.

In ACT 31 of the product confirmation processing shown in Fig. 5, the processor 40 acquires a captured image, which is captured by the camera 28 after the registration processing is performed, via the camera IF 51.

The captured image is a captured image of an imaging range including an area where an unregistered product is placed.

Here, it is assumed that a basket in which an unregistered product is put is placed on the first product placing table 11.

When the processor 40 acquires a captured image from the camera 28, the processing of the processor 40 proceeds to ACT 32.

In ACT 32, the processor 40 executes an image analysis to analyze whether there is an unregistered product in the captured image.

In ACT 33, the processor 40 determines whether there is an unregistered product in the captured image on the basis of a result of the image analysis.

When the processor 40 determines that, on the basis of a result of the image analysis, there is no unregistered product in the captured image (ACT 33, NO), the processing of the processor 40 proceeds to the checkout processing in which settlement for registered products is performed.

Further, when the processor 40 determines that, on the basis of a result of the image analysis, there is an unregistered product in the captured image (ACT 33, YES), the processing of the processor 40 proceeds to ACT 34.

In ACT 34, the processor 40 outputs an alert.

The alert may be a message displayed on the display 21 or may be a sound (buzzer) emitted by the speaker 24.

Further, the alert may be both of a message displayed on the display 21 and a buzzer emitted by the speaker 24.

After the processor 40 outputs the alert, the processing of the processor 40 proceeds to ACT 35.

In ACT 35, the processor 40 receives an instruction to return to the registration processing or an instruction to proceed to the checkout processing.

When receiving the instruction to return to the registration processing (ACT 35, NO), the processor 40 returns to the registration processing and resumes the registration processing for product.

Alternatively, when receiving an instruction to proceed to the checkout processing (ACT 35, YES), the processor 40 proceeds to the checkout processing in which settlement for registered products is performed.

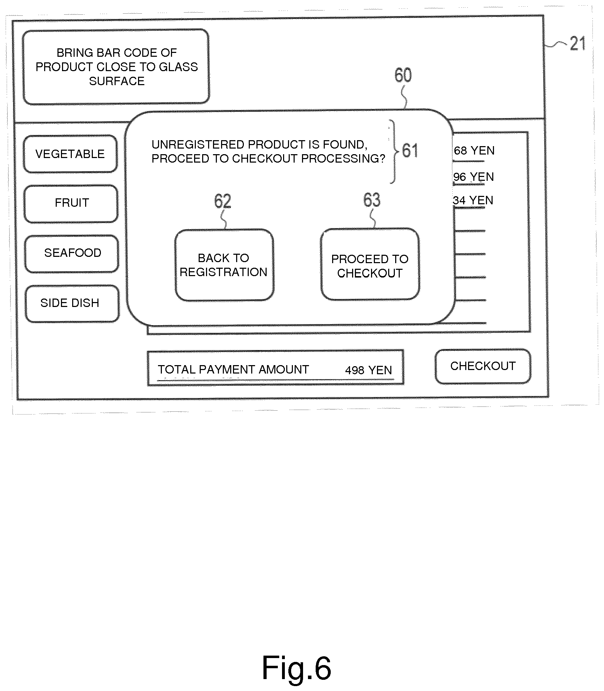

Fig. 6 shows an example of the display screen as an alert output example in the product confirmation processing of the first operation example.

In the example shown in Fig. 6, the processor 40 displays, on the registration screen, an alert window 60 including a message indicating that there is an unregistered product, as an example of an alert (display example).

In the alert window 60, a message 61 "Unregistered product found. Proceed to checkout processing?" is displayed. Further, the alert window 60 displays a back button 62 and a forward button 63.

The back button 62 is a touch key that gives an instruction to return to the registration processing.

The forward button 63 is a touch key that gives an instruction to proceed to the checkout processing.

When the alert window 60 shown in Fig. 6 is displayed, the customer touches any of the back button 62 and the forward button 63.

In a case where the customer returns to the registration processing to perform the registration processing for an unregistered product, the customer touches the back button 62. In a case where the customer proceeds to the checkout processing for registered products, the customer touches the forward button 63.

When the back button 62 is touched, the processor 40 returns to the registration processing and resumes the registration processing for product.

Further, when the forward button 63 is touched, the processor 40 proceeds to the checkout processing and performs settlement for registered products.

Next, the checkout processing in the checkout apparatus 1 will be described.

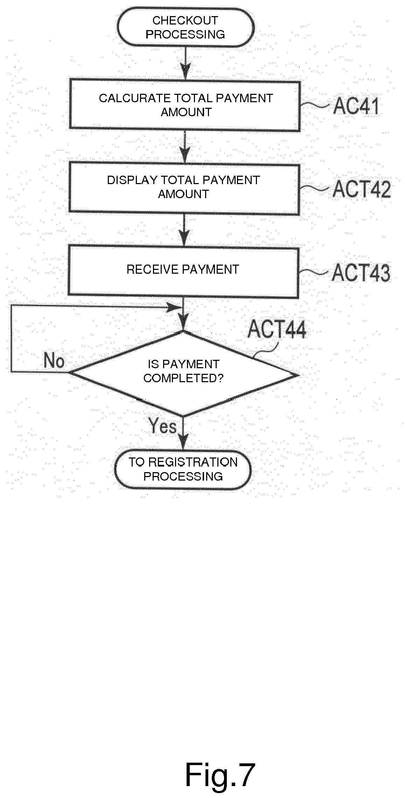

Fig. 7 is a flowchart for describing the checkout processing in the checkout apparatus 1.

In ACT 41 of the checkout processing shown in Fig. 7, the processor 40 adds up the prices of the registered products, to calculate the total payment amount.

When the processor 40 calculates the total payment amount, the processing of the processor 40 proceeds to ACT 42.

In ACT 42, when calculating the total payment amount, the processor 40 displays the calculated total payment amount on the display 21.

Further, the processor 40 displays the total payment amount and a guide for payment to the customer, to prompt the customer to pay the total payment amount of the products.

In ACT 43, the processor 40 receives the amount of payment of the customer, with the total payment amount being displayed.

For example, in a case where the customer presents a card for checkout, the processor 40 performs processing on the card presented by the customer with use of the card reader/writer 22. The processor 40 performs processing on the card, to receive the total payment amount of the products.

Alternatively, in a case where the customer requests settlement in cash, the cash processing machine 27 processes the cash deposited by the customer, so that the processor 40 receives the total payment amount of the products.

When reception of the total payment amount is completed (ACT 44, YES), the processor 40 terminates the checkout processing and a series of checkout processing.

When the series of checkout processing is terminated, the processor 40 proceeds to the registration mode and enters a standby state of the checkout processing for the next customer.

As described above, according to the first operation example, the checkout apparatus 1 executes the product confirmation processing of confirming the presence or absence of an unregistered product when proceeding to the checkout processing from the registration processing.

In the product confirmation processing, the checkout apparatus 1 determines the presence or absence of a product in a captured image of an area where an unregistered product is placed.

When determining that there is a product in the captured image, the checkout apparatus 1 outputs an alert indicating that there is an unregistered product.

With this configuration, the checkout apparatus 1 can confirm that there is an unregistered product before proceeding to the checkout processing, and can output an alert when determining that there is an unregistered product.

As a result, according to the first operation example, it is possible to prevent a customer from forgetting to register products unintentionally and executing the checkout processing.

Further, the checkout apparatus 1 includes the display 21 that displays a guide for the customer.

The checkout apparatus 1 can display the presence of a product in an area where an unregistered product is placed, as the alert, on the display 21.

This makes it possible to confirm the presence of an unregistered product by the visual perception of the customer and prevent the customer from forgetting to register products and then executing the checkout processing.

Further, the checkout apparatus 1 includes the speaker 24 that emits a warning sound. The checkout apparatus 1 can emit a sound indicating that there is a product in an area where an unregistered product is placed, as an alert, from the speaker 24.

This makes it possible to inform the customer of an unregistered product through the auditory perception of the customer and prevent the customer from forgetting to register products and then executing the checkout processing.

### (Second Operation Example)

Next, the second operation example of the checkout apparatus 1 will be described.

In the first operation example, in a case where an instruction to proceed to the checkout processing is given (an instruction to terminate the registration processing is given), the checkout apparatus 1 performs the product registration processing.

In contrast to this, in the second operation example, the checkout apparatus 1 continuously executes the product confirmation processing during the registration processing.

When the checkout apparatus 1 determines that there is an unregistered product by the product confirmation processing executed during the registration processing, the checkout apparatus 1 displays an indicator indicating that there is an unregistered product.

Further, when the checkout apparatus 1 determines that there is no unregistered product by the product confirmation processing executed during the registration processing, the checkout apparatus 1 hides the indicator and proceeds to the checkout processing.

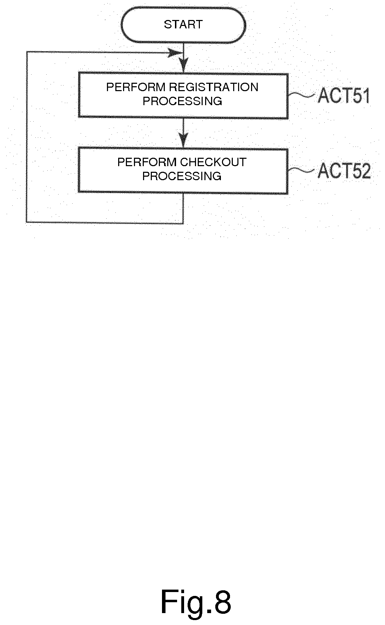

Fig. 8 is a flowchart showing a flow of each processing as the second operation example of the checkout apparatus 1.

An operation of the customer to start the registration processing is similar to that of the first operation example described above.

In ACT 51 shown in Fig. 8, the processor 40 executes the registration processing of registering each product as a checkout target, in response to an instruction to start registration.

In the second operation example, the processor 40 executes the product confirmation processing of confirming the presence or absence of an unregistered product, together with the registration processing of registering a product.

In other words, during the registration processing, the processor 40 informs the customer of information indicating the presence or absence of an unregistered product, which is confirmed in the product confirmation processing.

For example, during the registration processing, the processor 40 displays an indicator on a registration screen displayed by the display 21, the indicator indicating the presence or absence of an unregistered product.

In the registration processing, the customer confirms the presence or absence of an unregistered product by the indicator displayed on the registration screen and also gives an instruction to proceed to the checkout processing.

When an instruction to proceed to the checkout processing is given, the processing of the processor 40 proceeds to the checkout processing of ACT 52.

In the second operation example, the processor 40 executes the product confirmation processing also during the checkout processing.

In the checkout processing of the second operation example, the processor 40 executes the product confirmation processing and displays a result of confirmation on the presence or absence of an unregistered product, as an indicator, on the display 21.

Next, the product registration processing in the second operation example will be described.

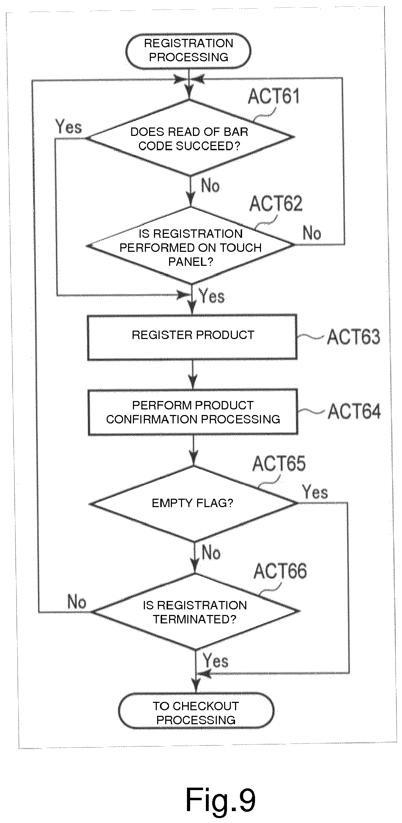

Fig. 9 is a flowchart showing the registration processing in the second operation example of the checkout apparatus 1.

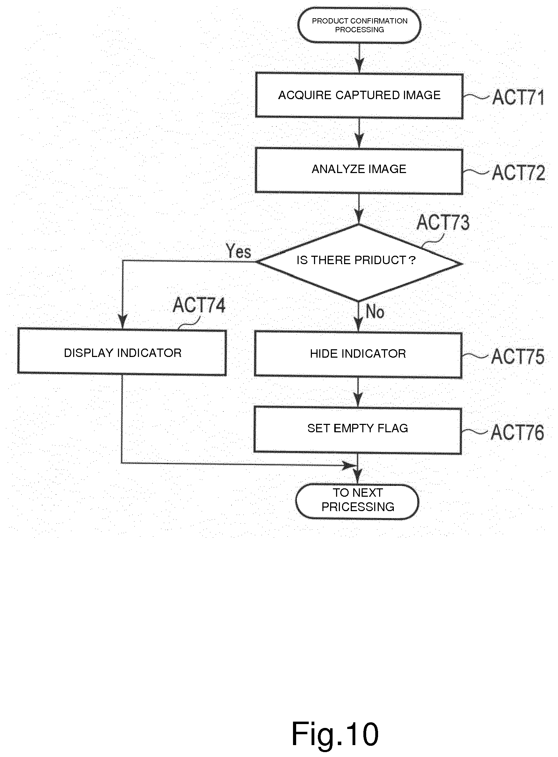

Further, Fig. 10 is a flowchart showing the product confirmation processing in the second operation example.

A customer operation in the registration processing for product is similar to that of the first operation example described above.

In other words, the customer takes out the products placed on the first product placing table 11 one by one and causes the scanner 25 or the hand scanner 26 to scan a bar code of the product.

In ACT 61 of the product registration processing shown in Fig. 9, the processor 40 acquires a scan image of a product via the scanner IF 44 or 45 and detects a bar code from the acquired scan image. The processor 40 decodes the detected bar code and recognizes the product.

When the processor 40 can identify the product from the bar code, that is, the read of the bar code succeeds (ACT 61, Yes), the processing of the processor 40 proceeds to ACT 63.

Further, when the processor 40 fails to identify the product from the bar code, that is, the read of the bar code fails to succeed (ACT 61, No), the processing of the processor 40 proceeds to ACT 62.

In ACT 62, the processor 40 receives an input of product information by a key operation of a touch key or the like displayed by the display 21.

With this configuration, the processor 40 receives product information of a product provided with no bar code, a product whose bar code fails to be detected, or the like by the key operation. When the product information is input by the key operation (ACT 62, YES), the processing of the processor 40 proceeds to ACT 63.

In ACT 63, the processor 40 registers information indicating a product identified from the bar code or information indicating a product input by the key operation, as product information of the product to be a checkout target.

When the processor 40 registers the product information, the processing of the processor 40 proceeds to ACT 64.

In ACT 64, the processor 40 executes the product confirmation processing.

The product confirmation processing in the second operation example may be performed at an optional timing during the registration processing without being limited to a timing immediately after the product is registered.

Further, the product confirmation processing in the second operation example may be performed in parallel to the registration processing.

In ACT 71 shown in Fig. 10, for the product confirmation processing in the second operation example, the processor 40 acquires a captured image, which is captured by the camera 28, via the camera IF 51.

When the processor 40 acquires a captured image of the camera 28, the processing of the processor 40 proceeds to ACT 72.

In ACT 72, the processor 40 analyzes whether there is an unregistered product in the captured image.

In ACT 73, the processor 40 determines whether there is an unregistered product in the captured image on the basis of a result of the analysis described above.

When the processor 40 determines that there is an unregistered product in the captured image (ACT 73, YES), the processing of the processor 40 proceeds to ACT 74.

In ACT 74, the processor 40 displays an indicator on the display 21, the indicator indicating that there is an unregistered product.

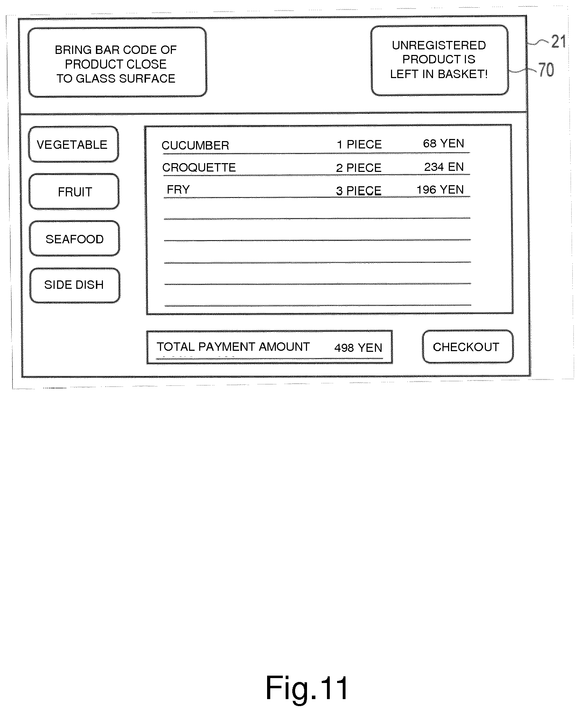

Fig. 11 shows a display example of an indicator 70 indicating that there is an unregistered product.

In the display example shown in Fig. 11, the indicator 70 is displayed at a predetermined position of the registration screen displayed during the registration processing.

During a period in which it is determined that there is an unregistered product, the indicator 70 is constantly displayed on the display 21.

In other words, the processor 40 constantly displays the indicator 70 on the display 21 until it is determined that there is no unregistered product, and constantly informs the customer of the presence of an unregistered product.

With this configuration, the customer can constantly recognize the presence or absence of an unregistered product through the indicator on the display.

Further, when the processor 40 determines that there is no unregistered product in the captured image (ACT 73, NO), the processing of the processor 40 proceeds to ACT 75.

In ACT 75, the processor 40 hides the indicator 70 displayed on the display 21.

Furthermore, in ACT 76, the processor 40 sets an empty flag indicating that there is no unregistered product.

Further, in ACT 65 of the registration processing shown in Fig. 9, the processor 40 checks whether an empty flag is set.

When determining that the empty flag is set (ACT 65, Yes), the processor 40 terminates the registration processing and proceeds to the checkout processing.

Alternatively, when the processor 40 determines that the empty flag is not set (ACT 65, No), the processing of the processor 40 proceeds to ACT 66.

Also in ACT 66, the processor 40 receives an instruction to terminate the registration processing (proceed to the checkout processing) by a key operation.

When the processor 40 does not receive an instruction to terminate the registration processing (proceed to the checkout processing) by the key operation (ACT 66, No), the processing of the processor 40 returns to ACT 61 to perform the registration processing for the next product.

When the processor 40 receives an instruction to terminate the registration processing (proceed to the checkout processing) by the key operation (ACT 66, Yes), the processing of the processor 40 proceeds to the checkout processing.

It should be noted that, in the checkout processing of the second operation example, checkout for registered products may be executed by the procedure shown in Fig. 7, which has been described in the first operation example descried above.

In the checkout processing of the second operation example, however, if the empty flag is not set, the processor 40 may display an indicator on the display, the indicator indicating that there is an unregistered product.

With this configuration, in the second operation example, it is possible to inform the customer of the presence of an unregistered product also in the checkout processing.

As described above, according to the second operation example, the checkout apparatus 1 determines the presence or absence of a product in a captured image of an area where an unregistered product is placed, during the registration processing.

During the registration processing, the checkout apparatus 1 displays an indicator indicating that there is an unregistered product, until it is determined that there is no unregistered product.

The checkout apparatus 1 hides the indicator indicating that there is an unregistered product, when determining that there is no product in the captured image.

With this configuration, the checkout apparatus 1 can inform the customer of the presence of an unregistered product by the indicator during the registration processing.

As a result, it is possible for a customer to easily confirm the presence or absence of an unregistered product during the registration processing and possible to prevent the customer from forgetting to register products unintentionally and then executing the checkout processing.

Further, according to the second operation example, when determining that there is no unregistered product during the registration processing, the checkout apparatus 1 proceeds to the checkout processing.

With this configuration, according to the second operation example, when it is determined that there is no unregistered product during the registration processing, the checkout processing for registered products can be executed without a key operation (automatically).

As a result, according to the second operation example, it is possible to omit an operation of a customer, such as an instruction to proceed to the checkout processing, thus providing a checkout operation with high convenience.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A checkout apparatus, comprising:
a camera that captures an image of an imaging range including a placing area where a product is placed and outputs the captured image;
a scanner that scans the product taken from the placing area and outputs a scan image; and
a processor that
acquires product information, the product information indicating the product recognized on the basis of the scan image output from the scanner, and executes registration processing of registering the product information,
determines, when an instruction to terminate the registration processing is given, whether there is a product in the placing area on the basis of the captured image,
outputs an alert when determining that there is a product in the placing area, and
executes, when determining that there is no product in the placing area, checkout processing of performing settlement for the product that has been subjected to the registration processing.

2. The checkout apparatus according to Claim 1, further comprising
a display that displays information on a product, wherein
the processor causes the display to display a message as the alert, the message indicating that there is a product in the placing area.

3. The checkout apparatus according to Claim 2, wherein
the processor causes the display to display a registration screen during the registration processing, the registration screen including content related to the registration processing.

4. The checkout apparatus according to Claim 3, wherein
the processor adds, when the instruction to terminate the registration processing is given and when determining that there is a product in the placing area, the message to the registration screen and causes the display to display the resultant registration screen.

5. The checkout apparatus according to Claim 4, wherein
the processor adds a window to the registration screen, the window including the message, a button to receive an instruction to return to the registration processing, and a button to receive an instruction to proceed to the checkout processing, and causes the display to display the resultant registration screen.

6. The checkout apparatus according to any one of Claims 1 to 5, further comprising
a speaker that outputs a sound, wherein
the processor causes the speaker to output a sound as the alert, the sound indicating that there is a product in the placing area.

7. A checkout method for a checkout apparatus, the checkout apparatus including
a camera that captures an image of an imaging range including a placing area where a product is placed and outputs the captured image, and
a scanner that scans the product taken from the placing area and outputs a scan image, the checkout method comprising:
acquiring product information, the product information indicating the product recognized on the basis of the scan image output from the scanner, and executing registration processing of registering the product information;
determining, when an instruction to terminate the registration processing is given, whether there is a product in the placing area on the basis of the captured image;
outputting an alert when determining that there is a product in the placing area; and
executing, when determining that there is no product in the placing area, checkout processing of performing settlement for the product that has been subjected to the registration processing.

8. The checkout method according to Claim 7, the checkout apparatus further comprising a display, the method further comprising:
displaying information on a product on the display; and
displaying a message as the alert on the display, the message indicating that there is a product in the placing area.

9. The checkout method according to Claim 8, further comprising :
displaying a registration screen on the display during the registration processing, the registration screen including content related to the registration processing.

10. The checkout method according to Claim 9, further comprising adding, when the instruction to terminate the registration processing is given and when determining that there is a product in the placing area, the message to the registration screen and displaying the resultant registration screen on the display.

11. The checkout method according to Claim 10, further comprising adding a window to the registration screen, the window including the message, a button to receive an instruction to return to the registration processing, and a button to receive an instruction to proceed to the checkout processing, and displaying the resultant registration screen on the display.

12. The checkout method according to any one of Claims 7 to 11, the checkout apparatus further comprising a speaker, the method further comprising outputting a sound as the alert from the speaker, the sound indicating that there is a product in the placing area.

13. A checkout apparatus, comprising:
a display that displays information on a product;
a camera that captures an image of an imaging range including a placing area where a product is placed and outputs the captured image;
a scanner that scans the product taken from the placing area and outputs a scan image; and
a processor that
acquires product information, the product information indicating the product recognized on the basis of the scan image output from the scanner, and executes registration processing of registering the product information,
determines, during the registration processing, whether there is a product in the placing area on the basis of the captured image,
causes, when determining that there is a product in the placing area, the display to display an indicator, and
executes, when an instruction to terminate the registration processing is given, checkout processing of performing settlement for the product registered in the registration processing.

14. The checkout apparatus according to Claim 13, wherein
the processor hides the indicator and executes the checkout processing when determining that there is no product in the placing area on the basis of the captured image.

15. The checkout apparatus according to Claim 13 or 14, wherein
the processor
causes the display to display a registration screen during the registration processing, the registration screen including content related to the registration processing, and
adds, when determining that there is a product in the placing area, the indicator to the registration screen and causes the display to display the resultant registration screen.
